# EUROPÄISCHE PATENTANMELDUNG

(11) **EP 1 973 309 A1**
(43) Veröffentlichungstag der Anmeldung: **24.09.2008**
(21) Anmeldenummer: 07005929.0
(22) Anmeldetag: 22.03.2007
(51) Int. Cl.: H04M 1/02, G06K 7/00, H04B 1/38, H04Q 7/32, H04M 1/725

(54) **Mobilfunkendgerät**

(71) Anmelder: Holwerda, Denny, 7545 Enschede (NL)
(72) Erfinder: Holwerda, Denny, 7545 Enschede (NL)
(74) Vertreter: Stenger, Watzke & Ring

(57) **Zusammenfassung**

Die vorliegende Erfindung betrifft ein Mobilfunkendgerät (1), insbesondere Mobiltelefon mit einer Lese-Schreibe-Elektronik und einer damit verbindbaren Aufnahme und Anschlußeinrichtung für eine Prozessorkarte (2). Um ein Mobilfunkendgerät (1) bereitzustellen, welches die Nutzung mehrerer Prozessorkarten (2) ermöglicht, so daß ein Wechsel zwischen den Prozessorkarten (2) ohne ein lästiges Öffnen und Schließen des Mobilfunkendgerätes (1) unschädlich für dieses erfolgen kann, wird mit der Erfindung vorgeschlagen, daß wenigstens eine weitere Aufnahme- und Anschlußeinrichtung für eine Prozessorkarte (2) vorgesehen ist, welche mit der Lese-Schreibe-Elektronik des Mobilfunkendgeräts (1) verbindbar ist. Bei den Prozessorkarten kann es sich z.B. um SIM-Karten oder Speicherkarten oder Karten zum Empfang von digitalen Fernseh-, Radio- und/oder Videokanälen handeln.

## Beschreibung

Die vorliegende Erfindung betrifft ein Mobilfunkendgerät, insbesondere Mobiltelefon, mit einer Lese-Schreibe-Elektronik und einer damit verbindbaren Aufnahme- und Anschlußeinrichtung für eine Prozessorkarte.

Im allgemeinen weisen herkömmliche Mobilfunkendgeräte eine Aufnahme- und Anschlußeinrichtung zur Aufnahme einer Prozessorkarte in Form einer SIM-Karte auf, auf der teilnehmerrelevante Daten, Algorithmen und eine Netzzugangsberechtigung in einem entsprechenden Chip der Prozessorkarte gespeichert sind.

Mobilfunkendgeräte, wie beispielsweise Laptops, Palmtops, Handhelds, Mobiltelefone und dergleichen, weisen meist eine Aufnahme- und Anschlußeinrichtung mit einer damit verbundenen Lese-Schreibe-Einrichtung für eine Prozessorkarte auf, die auf diese Weise mit der Elektronik des Mobilfunkendgeräts verbindbar ist. Eine dabei verwendete Prozessorkarte weist wenigstens einen Chip auf, in dem beispielsweise die Telefonnummer, der Teilnehmerschlüssel, usw. für ein bestimmtes Mobilfunknetz eines Mobilfunkanbieters gespeichert sind. Zudem findet als Prozessorkarte eine Dual-SIM-Karte Verwendung, welche zwei Chips aufweist, die jeweils eigene Daten beispielsweise über den Nutzer, den Mobilfunkbetreiber und die Zugriffsberechtigung zum Netz enthalten. Um von einem Chip auf den anderen zu wechseln, kann zum Beispiel das Mobilfunkendgerät aus- und anschließend wieder eingeschaltet werden oder zum anderen das Umschalten zwischen den Prozessorkarten über ein Prozessorkartenmenü erfolgen, welches von dem Display des Mobilfunkendgeräts anzeigbar ist. Die Möglichkeit der Verwendung mehrerer SIM-Kartenchips in einem etwa briefmarkengroßen Plastikkörper einer sogenannten "Mini-Karte" ist durch die Größe dieses Plastikkörpers beschränkt, so daß lediglich zwei Chips in einem derartigen Plastikkörper angeordnet werden können.

Um aber beispielsweise dienstliche und private Telefonnummern zur Trennung der diesbezüglichen Nutzung eines Mobilfunkendgeräts auf verschiedenen Prozessorkarten zur Verfügung zu haben und zudem unterschiedliche Tarife im In- und Ausland von entsprechenden Anbietern sowie Prepaid-Prozessorkarten nutzen zu können, ist es erforderlich, die Prozessorkarte auszuwechseln, was bedeutet, daß das Mobilfunkendgerät geöffnet und anschließend wieder verschlössen werden muß, wobei derartige Mobilfunkendgeräte meist nicht dafür ausgelegt sind, ständig geöffnet und verschlossen zu werden. Durch dieses Auswechseln der Prozessorkarten kann es leicht zu Beschädigungen und/oder Verunreinigungen der Aufnahme- und Anschlußeinrichtung für die Prozessorkarte und der damit verbundenen Kontaktelemente kommen.

Ausgehend von dem vorher Beschriebenen ist es die **Aufgabe** der vorliegenden Erfindung, ein Mobilfunkendgerät bereitzustellen, welches die Nutzung mehrerer Prozessorkarten ermöglicht, so daß ein Wechsel zwischen den Prozessorkarten ohne ein lästiges Öffnen und Schließen des Mobilfunkendgeräts unschädlich für dieses erfolgen kann.

Diese Aufgabe wird erfindungsgemäß durch ein Mobilfunkendgerät nach Anspruch 1 gelöst.

Erfindungsgemäß weist das Mobilfunkendgerät wenigstens eine weitere, vorzugsweise mehrere Aufnahme- und Anschlußeinrichtungen für Prozessorkarten auf, weiche mit der Lese-Schreibe-Elektronik des Mobilfunkendgeräts verbindbar sind. Somit können Prozessorkarten verschiedenster Anbieter versehen mit unterschiedlichsten Tarifen und zugehörigen Telefonnummern einmalig in das Mobilfunkendgerät eingefügt werden, wonach auf die verschiedenen Prozessorkarten ohne ständiges Öffnen und Schließen des Mobilfunkendgeräts zugegriffen werden kann. Somit wird das Mobilfunkendgerät, insbesondere die empfindlichen Bauteile der Aufnahme- und Anschlußeinrichtungen und der damit verbundenen Kontaktfelder, vor eventuellen Beschädigungen und Verunreinigungen geschützt, so daß ein derartiges Mobilfunkendgerät nicht nur vielseitig nutzbar, sondern auch im Vergleich zu herkömmlichen Mobilfunkendgeräten, bei denen ein Kartenwechsel durch Öffnen und Schließen erfolgen muß, langlebiger ist.

Obwohl heute meist als Prozessorkarte eine SIM-Karte verwendet wird, ist es im Rahmen der Erfindung vorgesehen, daß auch andere Prozessorkarten in entsprechend dafür ausgebildete Aufnahme- und Anschlußeinrichtungen des Mobilfunkendgeräts eingesetzt werden können. Diese Prozessorkarten können beispielsweise als Speicherkarte ausgebildet sein, die ein eigenes Betriebssystem aufweist. Dadurch kann die Verwendung eines erfindungsgemäßen Mobilfunkendgeräts sehr flexibel gestaltet werden, indem eine derartige Prozessorkarte beispielsweise einen digitalen Empfang von weiteren anbieterspezifischen Leistungen ermöglicht. Hierbei sind beispielsweise der Empfang von digitalen Femseh-, Radio- und/oder Videokanälen zu nennen, welche etwa über das Betriebssystem der Prozessorkarte in von dem Mobilfunkendgerät verarbeitbare und ausgebbare Daten umgewandelt werden können. Dabei kann zudem vorgesehen sein, daß die Prozessorkarte eine Zugangsberechtigung aufweist, welche beispielsweise die Nutzung etwaiger kostenpflichtiger Kanäle und/oder deren Entschlüsselung ermöglicht. Desweiteren ist es möglich, daß eine entsprechende Abrechnung bezogener Leistungen entweder über einen Mobilfunkanbieter erfolgt, indem beispielsweise die zusätzliche Prozessorkarte über eine Elektronik eines Mobilfunkendgeräts mit einer SIM-Karte im Mobilfunkendgerät kommuniziert, das heißt beispielsweise einen Anbietercode, einen der spezifischen bezogenen Leistung entsprechenden Code und/oder Daten bezüglich des Nutzungszeitraums an die SIM-Karte übergibt, welche diese Daten zur Abrechnung an das entsprechende Mobilfunknetz eines Mobilfunkanbieters sendet. Es sind somit verschiedenste Nutzungs- und Abrechnungsvariationen möglich, so daß erfindungsgemäße Mobilfunkendgerät eine sehr große Anwendungsvielfalt aufweist.

Nach einer vorteilhaften Ausgestaltung der Erfindung weist das Mobilfunkendgerät eine Auswahleinrichtung auf. Mit dieser Auswahleinrichtung kann zwischen den einzelnen Prozessorkarten umgeschaltet und so eine dieser Prozessorkarten für die Verwendung ausgewählt werden. Dabei kann es sich bei der Auswahleinrichtung um ein manuell betätigbares Betätigungselement handeln, welches äußerlich an dem Mobilfunkendgerät angeordnet ist. So kann etwa bei Betätigung des Betätigungselementes von einer Prozessorkarte auf die nächste umgeschaltet werden. Als Betätigungselement kommt zum Beispiel ein Drehrad oder Druckknopf in Frage, weiche zudem mit einer Elektronik verbunden sein kann, so daß beispielsweise eine Auswahl einer Prozessorkarte durch langes Gedrückthalten des Druckknopfes erfolgt, wodurch verhindert wird, daß unbeabsichtigt zwischen den Prozessorkarten umgeschaltet wird, wenn eine Kraft beispielsweise bei Transport des Mobilfunkendgerätes in einer Tasche oder dergleichen auf das Betätigungselement einwirkt.

Eine weitere vorteilhafte Ausgestaltung der Erfindung sieht vor, daß das Mobilfunkendgerät eine Auswahlsoftware aufweist. Beispielsweise verfügt das Mobilfunkendgerät über eine Software, welche zur Darstellung eines Prozessorkartenmenüs geeignet ist, weiches auf dem Display des Mobilfunkendgeräts anzeigbar ist, so daß ein Nutzer über dieses Menü gezielt eine der Prozessorkarten auswählen kann.

Gemäß einer weiteren vorteilhaften Ausgestaltung der Erfindung weist das Mobilfunkendgerät eine Kontrolleinrichtung auf. Diese zeigt an, welche der Prozessorkarten zur Zeit verwendet wird, was von Vorteil bei der Verwendung mehrerer Prozessorkarten ist. Somit ist der Nutzer jederzeit in der Lage, auf einfache Art und Weise zu kontrollieren, ob die von ihm momentan bevorzugte Prozessorkarte auch zum Nutzungszeitpunkt verwendet wird. Bei der Kontrolleinrichtung kann es sich um eine akustische oder optische Kontrolleinrichtung handeln. Zudem kann eine Kontrolle auch über durch Vibrationen ausgegebene Signale erfolgen. Auch sind Kombinationen dieser Kontrollarten möglich, wobei das jeweils durch das Mobilfunkendgerät ausgegebene Signal eine genaue Zuordnung zu einer entsprechenden Prozessorkarte erlaubt.

Ferner wird mit der Erfindung vorgeschlagen, daß die Kontrolleinrichtung eine LCD-Anzeige, eine LED-Anzeige oder eine OLED-Anzeige ist. Alle diese Anzeigen sind beispielsweise zu einer alphanumerischen Anzeige bezüglich der im Gebrauch befindlichen SIM-Card geeignet. Welche Anzeigeart gewählt wird, hängt von den jeweiligen Anforderungen und Wünschen ab.

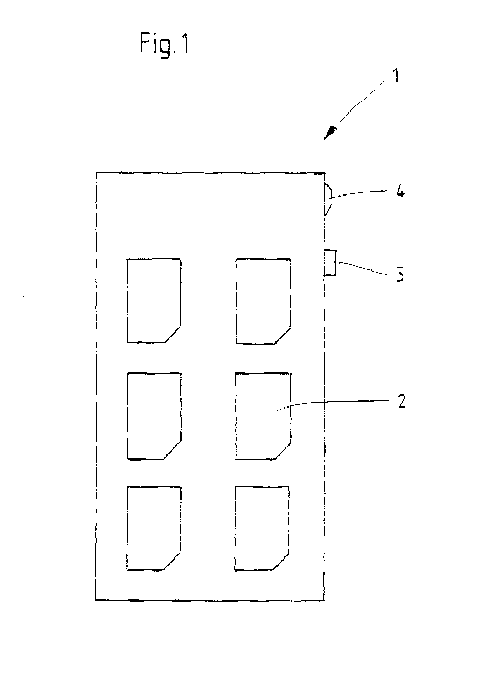

Weitere Vorteile und Merkmale der vorliegenden Erfindung werden im folgenden anhand der Figur beschrieben. Dabei zeigt
- Fig. 1: eine schematische Rückansicht eines Ausführungsbeispiels für ein erfindungsgemäßes Mobilfunkendgerät.

Fig. 1 zeigt ein Ausführungsbeispiel für ein erfindungsgemäßes Mobilfunkendgerät 1 in Form eines Mobiltelefons, welches mit sechs Prozessorkarten 2 versehen ist, wobei es sich bei den Prozessorkarten 2 beispielsweise um SIM-Karten der unterschiedlichsten Anbieter mit den unterschiedlichsten Tarifen handelt. Um zwischen den Prozessorkarten 2 umschalten zu können, weist das Mobilfunkendgerät 1 eine Auswahleinrichtung 3 in Form eines seitlich am Mobilfunkendgerät 1 angeordneten Betätigungsknopfes auf, wobei beispielsweise durch diesen Betätigungsknopf der Reihe nach die Prozessorkarten 2 angewählt werden können und die jeweilige Nummer der angewählten Prozessorkarte 2 an seiner ebenfalls seitlich am Mobiltelefon angeordneten optischen Kontrolleinrichtung 4 in Form einer LED-Anzeige angezeigt werden kann. Die Auswahleinrichtung 3 und die optische Kontrolleinrichtung 4 können beispielsweise mit einer Elektronik verbunden sein, so daß bei kurzer Betätigung des Betätigungsknopfs ein Umschalten zwischen den einzelnen Prozessorkarten 2 und durch längere Betätigung des Betätigungsknopfes eine endgültige Auswahl einer bestimmten Prozessorkarte 2 erfolgen kann.

Das oben beschriebene Ausführungsbeispiel dient der Erläuterung und ist nicht beschränkend.

### Bezugszeichenliste

- 1: Mobilfunkendgerät
- 2: Prozessorkarte
- 3: Auswahleinrichtung
- 4: Kontrolleinrichtung

## Patentansprüche

1. Mobüfunkendgerät (1), insbesondere Mobiltelefon, mit einer Lese-Schreibe-Elektronik und einer damit verbindbaren Aufnahme- und Anschlußeinrichtung für eine Prozessorkarte (2),
**gekennzeichnet durch**
wenigstens eine weitere Aufnahme- und Anschlußeinrichtung für eine Prozessorkarte (2), welche mit der Lese-Schreibe-Elektronik verbindbar ist.

2. Mobilfunkendgerät (1) nach Anspruch 1, **gekennzeichnet durch** eine Auswahleinrichtung (3).

3. Mobilfunkendgerät (1) nach einem der vorhergehenden Ansprüche, **dadurch gekennzeichnet, daß** das Mobilfunkendgerät (1) eine Auswahlsoftware aufweist.

4. Mobilfunkendgerät (1) nach einem der vorhergehenden Ansprüche **gekennzeichnet durch** eine Kontrolleinrichtung (4).

5. Mobilfunkendgerät (1) nach Anspruch 4, **dadurch gekennzeichnet, daß** die optische Kontrolleinrichtung (4) eine LCD-Anzeige, eine LED-Anzeige oder eine OELD-Anzeige ist.
